Europäisches Patentamt

European Patent Office

Office européen des brevets

(11) Publication number: **0 122 066**
**A1**

# EUROPEAN PATENT APPLICATION

(21) Application number: 84301775.7

(22) Date of filing: 15.03.84

(51) Int. Cl.³: **F 04 C 18/02**

(30) Priority: 15.03.83 JP 36339/83 U

(43) Date of publication of application: 17.10.84
Bulletin 84/42

(84) Designated Contracting States: DE FR GB IT SE

(71) Applicant: SANDEN CORPORATION, 20 Kotobuki-cho,
Isesaki-shi Gunma-ken (JP)

(72) Inventor: Gonda, Hideyuki, 12-10 Ote-Machi, Isesaki-shi
Gunma-ken (JP)
Inventor: Sakamoto, Seiichi, 2210 Munataka
Gunma-machi, Gunma-gun Gunma-ken (JP)

(74) Representative: Pritchard, Colin Hubert et al, Mathys &
Squire 10 Fleet Street, London EC4Y 1AY (GB)

(54) Scroll type fluid displacement apparatus with axial moving prevent device of bearing for driving mechanism.

(57) A scroll type fluid displacement apparatus has a driving mechanism for an orbiting scroll (23) to effect the orbital motion which comprises a drive shaft (13), a drive pin eccentrically projecting from end surface of drive shaft and an annular boss (233) axially projecting from circular end plate (231) of orbiting scroll for receiving in the drive pin. A bearing (33) is closely fitted in the boss for rotatable supported the orbiting scroll on the drive pin and prevented from axial movement by a moving prevent device. The axial movement of bearing caused by thermal expansion of the boss is thus securely prevented.

-1-

SCROLL TYPE FLUID DISPLACEMENT APPARATUS

WITH AXIAL MOVING PREVENT DEVICE

OF BEARING FOR DRIVING MECHANISM


This invention relates to a scroll type fluid displacement apparatus, and more particularly, to an improvement in a driving device for an orbiting scroll of the scroll type fluid displacement apparatus.

Scroll type fluid displacement apparatus are well known in the prior art. For example, U.S. Patent No. 801,182 to Creux, discloses a basically construction of the scroll type apparatus. That is the scroll type apparatus includes two scrolls each having a circular end plate and spiroidal or involute spiral element. These scroll are maintained at angularly and radially offset so that both spiral elements interfit to make a plurality of line contacts between their spiral curved surfaces to thereby sealed off and define at least one pair of fluid pockets. The relative orbital motion of the two scrolls shift the line contacts along the spiral curved surfaces and, as a result, the volume of the fluid pockets changes. Since the volume of the fluid pockets increases or decreases dependent on the direction of the orbital motion, the scroll type fluid displacement apparatus is applicable to compress, expand or pump fluids.

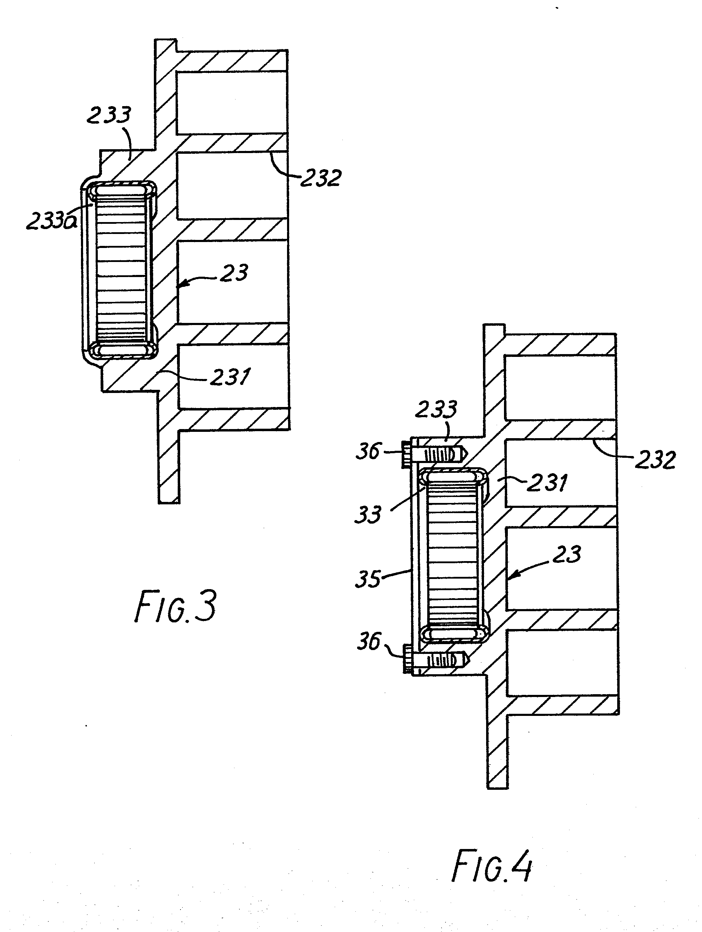

Generally, in the conventional scroll type fluid displacement apparatus, one scrolls fixed to a housing and the other scroll, which is the orbiting scroll, is eccentrically supported on a crank pin of a

- 1 -

rotating shaft to cause the orbital motion. In the U.S. Patent No. 4,411,604 to Terauchi discloses one embodiment of driving device for the orbiting scroll. As shown in Figure 4 of this prior patent, the orbiting scroll is rotatably supported on a bushing through a bearing and this bushing is also rotatably supported on crank pin eccentrically projecting from the inner end of rotating shaft, so that orbiting scroll is eccentrically supported on crank pin.

In this construction of the driving device the bearing is closely fitted within the boss, but the coefficient of thermal expansition of the bearing disposed between boss and the bushing and the boss is different so that, during the operation of the apparatus, the gap between boss and bearing is caused, even if the bearing is closely fitted within the boss. Therefore, the bearing could be axially moved and finally came out from the boss due to vibration of the apparatus or the operation of the apparatus.

It is a primary object of this invention to provide a scroll type fluid displacement apparatus having an improved driving device.

It is another object of this invention to provide a scroll type fluid displacement apparatus which is improved the endurance life.

It is still another object of this invention to provide a scroll type fluid displacement apparatus which is simple in construction to achieve the above objects and can be simply and reliable manufactured.

A scroll type fluid displacement apparatus according to this invention includes a housing having a front end plate. A fixed scroll is fixedly disposed relative to the housing and has a first circular end plate from which a first wrap extends. An orbiting scroll has a second circular end plate from which a second wrap extends. The first and second wraps interfit at an angular and radial offset to make a plurality of line contacts to define at least one pair of sealed off fluid pockets. A driving device including a drive shaft, which is rotatably supported by the front end plate, is operatively connected to the orbiting scroll to effect the orbital motion of the orbiting scroll.

An annular boss is formed on the other side of the second end plate from which the wrap extends. A drive pin eccentrically projecting from an inner end surface of the drive shaft is received within the boss. The bearing is closely fitted within the boss and prevented from axial movement by a moving prevent device attached to an axial end portion of the boss. Axial movement and finally falling off of the bearing from the boss is thus prevented in any time by prevent device.

The invention will now be described, by way of example, with reference to the accompanying drawings, in which:-

Figure 1 is a vertical sectional view of a compressor unit according to one embodiment of this invention;

Figure 2 is an exploded perspective view of the driving device shown in Figure 1;

Figure 3 is a vertical sectional view of an orbiting scroll shown in Figure 1;

Figure 4 is a vertical sectional view of an orbiting scroll according to another embodiment of this invention;

Figure 5 is a vertical sectional view of an orbiting scroll according to still another embodiment of this invention; and

Figure 6 is a front view of a snap ring shown in Figure 5.

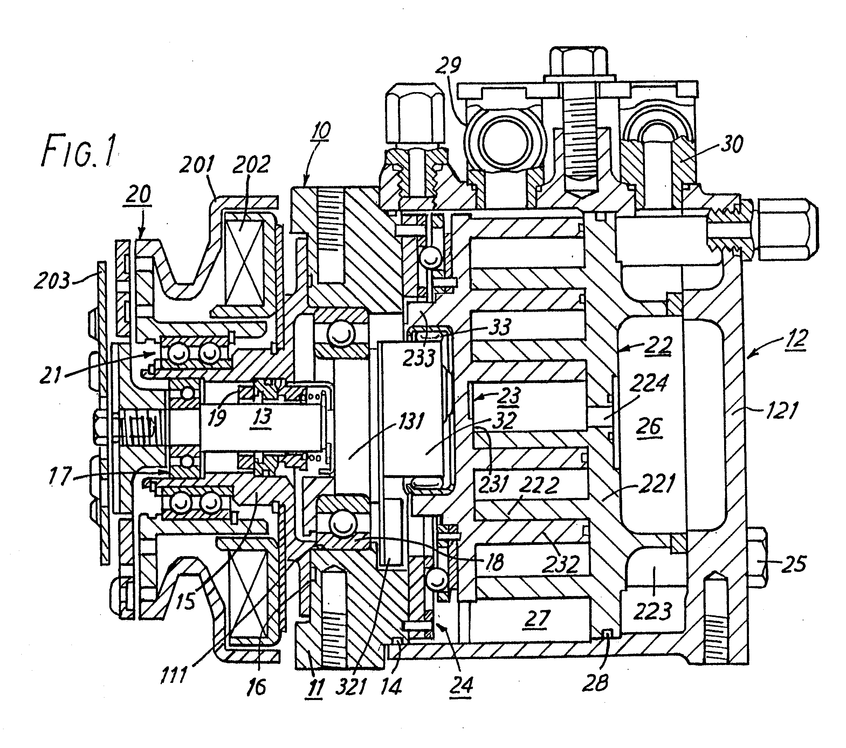

Referring to Figure 1, an embodiment of a scroll type fluid displacement apparatus is accordance with the present invention, in particular a scroll type refrigerant compressor unit is shown. The compressor unit includes a compressor housing 10 having a front end plate 11 and a cup shaped casing 12 fastened on the rear end surface of front end plate 11. An opening 111 is formed in the center of front end plate 11 for penetration or passage of a drive shaft 13. An opening portion of cup shaped casing 12 is covered by front end plate 11, and mating surface between cup shaped casing 12 and front end plate 11 is sealed by a O-ring 14. Front end plate 11 has an annular sleeve 15 projecting from the front end surface thereof which surrounds drive shaft 13 and defines a shaft seal cavity. In the embodiment shown in Figure 1, sleeve 15 is separately formed from front end plate 11. Therefore, sleeve 15 is fixed to the front end surface of front end plate 11 by screws (not shown). An O-ring 16 is placed between the end surface of front end plate 11 and an end surface of sleeve 15 to seal the fitting surface of front end plate 11 and sleeve 15. Alternatively, sleeve 15 may be formed integral with front end plate 11.

Drive shaft 13 is rotatably supported by sleeve 15 through a bearing 17 located within the front end of sleeve 15. Drive shaft 13 has a disk shaped rotor 131 at its inner end which is rotatably supported by front end plate 11 through a bearing 18 located within opening 111 of front end plate 11. A shaft seal assembly 19 is assembled on drive shaft 13 within a shaft seal cavity of sleeve 15.

An electromagnetic clutch 20, which is disposed on sleeve 15, comprises a pulley 201 rotatably supported on the sleeve 15 through a bearing 21, an electromagnetic coil 202 disposed within an annular cavity of pulley 201 and an armature plate 203 fixed on the outer end of drive shaft 13 which is extended from sleeve 15. Drive shaft 13 is thus connected to an external power source through electromagnetic clutch 20 and driven by the external power source.

A number of elements is disposed with the interior of cup shaped casing 12 including a fixed scroll 22, an orbiting scroll 23, a driving device for orbiting scroll 23 and a rotation preventing/thrust bearing device 24 for orbiting scroll 22. The interior of cup shaped casing 12 is defined between the inner wall of cup shaped casing 12 and the rear end surface of front end plate 11.

Fixed scroll 22 includes a circular end plate 221, a wrap or spiral element 222 affixed to or extending from one side surface of circular end plate 221, and a plurality of internally threaded boss 223 axially projectinf from the other side surface of circular end plate 221. An axial end surface of each bosses 223 is seated on the inner surface of an end plate 121 of cup shaped casing 12 and is fixed to end plate 121 by bolts 25. Fixed scroll 22 is thus fixed within cup shaped casing 12. Circular end plate 221 of fixed scroll 22 partitions the inner chamber of cup shaped casing 12 into a discharge chamber 26 included bosses 223 and a suction chamber 27 in which spiral element 222 is located. A seal ring 28 is placed between the outer peripheral surface of circular end plate 221 and the inner wall of cup shaped casing 12. A hole or discharge port 224 is formed through end plate 221 of fixed scroll 22 at a position near the center of spiral element 222; hole 224 is connected between the fluid pocket of spiral element center and discharge chamber 26.

Orbiting scroll 23, which is disposed in suction chamber 27, includes a circular end plate 231 and a wrap or spiral element 232 affixed to or extending from one side surface of circular end plate 231. Both spiral elements 222 and 232 interfit at angular offset of 180° and a predetermined radial offset. At least one pair of sealed off fluid pockets are thereby defined between their spiral elements 222 and 232. Orbiting scroll 23 is connected to driving device and rotation preventing/thrust bearing device 24. The these two device effect the orbital motion of orbiting scroll 23 by rotation of drive shaft 13.

As the orbiting scroll 23 orbits, the line contacts between both spiral elements 222 and 232 moves toward the center of the spiral elements along the surfaces of spiral element 222, 232. Fluid pockets move to the center with a consequent reduction in volume and compression of the fluid in the fluid pockets. The fluid or refrigerant gas, which is introduced into suction chamber 27 from an external fluid circuit through an inlet port 29 formed on cup shaped casing 12 is taken into fluid pockets formed between spiral elements 222 and 232 from the outer end portions of the spiral elements. As orbiting scroll 23 orbits, fluid in the fluid pockets is compressed and the compressed fluid is discharged into discharge chamber 26 from the center fluid pocket of the spiral element through hole 224. The fluid is then discharged to the external fluid circuit through an outlet port 30 formed on cup shaped casing 12.

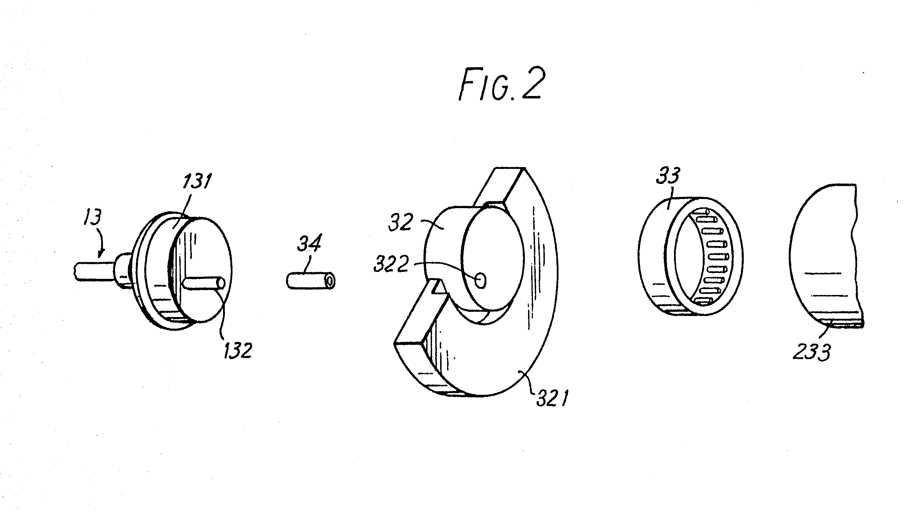

Referring to Figures 1 and 2, the driving device for orbiting scroll 23 will be described in greater detail. Drive shaft 13 is rotatably supported by sleeve 15 through bearing 17 and provided with disk shaped rotor 131 at its inner end portion thereof. Disk shaped rotor 131 is rotatably supported by front end plate 11 through bearing 18 located within opening 111 of front end plate 11. A crank pin 132 projects axially from an axial end surface of disk shaped rotor 131 at a position which is radially offset from the center of drive shaft 13. Circular end plate 231 of orbiting scroll 23 has a tubular boss 233 axially projecting from the end surface thereof the opposite side spiral element 232 extends. A discoid or short axial bushing 32 fits into boss 233 and is rotatably supported therein by a bearing, such as a needle bearing 33. Bushing 32 has a balanceweight 321, which has the shape of a portion of a disk or ring and extends radially from bushing 32 along a front surface thereof. An eccentric hole 322 is formed in bushing 32 at a position radially offset from center of bushing 32. Crank pin 132 fits into the eccentrically disposed hole 332 together with a bearing 34. Bushing 32 is therefore driven in an orbital path by the revolution of drive pin 132 and rotates within needle bearing.

Furthermore, rotation preventing/thrust bearing device 24 is located between the inner end surface of front end plate 11 and the axial end surface of circular end plate 231 of orbiting scroll 23 to prevent the rotation of orbiting scroll 23. As a result, orbiting scroll 23 orbit while maintaining its angular orientation relative to the fixed scroll 22.

In the above construction, as shown in Figure 3, needle bearing 33 is closely fitted within boss 233 of orbiting scroll 23 and a plurality of inner peripheral edge of boss 233 are caulked. Therefore, axial movement of needle bearing 33 is usually prevented by caulking portion 233a of boss 233, even if the gap between the inner surface of boss 233 and outer surface of needle bearing 33 is caused by thermal expantion of boss 233.

Referring to Figure 4, another embodiment of this invention is shown, illustrating a modification of the construction of preventing device for the needle bearing. In this embodiment, flat ring plate 35 is attached on the axial end surface of boss 233 by a plurality of bolts 36. The inner diameter of ring plate 35 is formed smaller than the outer diameter of needle bearing 33 disposed with boss 233 to face to one another. Therefore, the axial movement of the needle bearing is securely prevented by the ring plate attached on the boss.

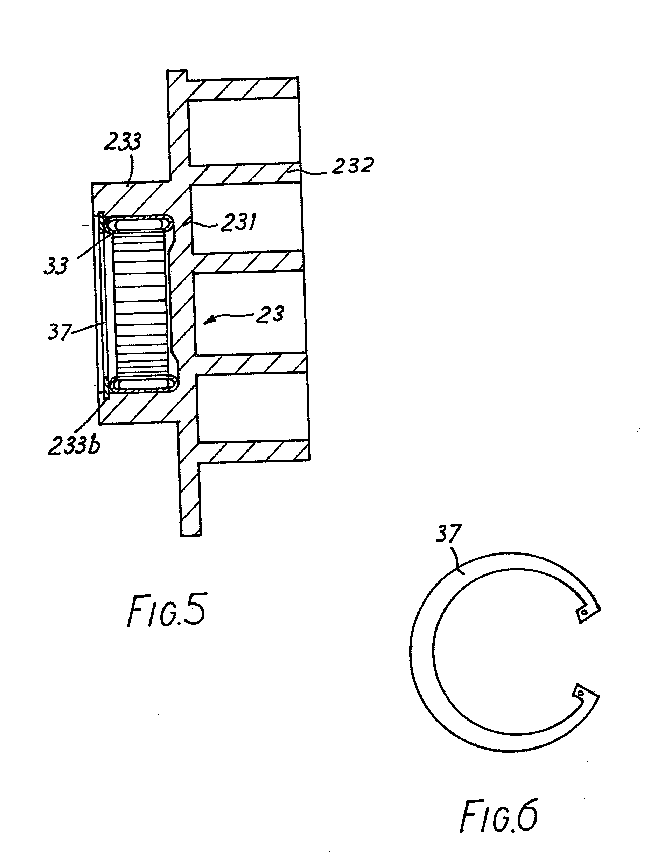

Referring to Figures 5 and 6, slightly a modification of the axial movement preventing device is shown. In this construction, the axial movement of needle bearing 33 closely fitted within boss 233 is prevented by snap ring 37 disposed within an annular groove 233b which is formed in boss 233. The axial moment of needle bearing 33 is thus prevented by snap ring 37.

This invention has been described in detail in connection with preferred embodiments. However, this description is for purposes of illustration only. It will be understood by those skilled in the art that other variations and modifications can be easily made within the scope of this invention, which is limited only by the following claims.

0122066

- 10 -

CLAIMS

1.   In a scroll type fluid displacement apparatus including a housing having a front end plate, a fixed scroll fixedly disposed relative to said housing and having a circular end plate from which a first wrap extends, an orbiting scroll having a circular end plate from which a second wrap extends, said first and second wraps interfitting at an angular and radial offset to make a plurality of line contacts to define at least one pair of sealed off fluid pockets, a driving device including a drive shaft operatively connected to said orbiting scroll to effect the orbital motion of said orbiting scroll while preventing rotation of said orbiting scroll, thus causing the fluid pockets to change volume due to the orbital motion of said orbiting scroll, the improvement comprises an annular boss formed on the other side of said circular end plate of orbiting scroll for receiving in a drive pin eccentrically projecting from an inner end of said drive shaft, and a bearing closely fitted within said boss and prevented from axial movement by a moving prevent device attached on the axial end portion of said boss.

2.   The scroll type fluid displacement apparatus of claim 1 wherein said moving prevent device comprises caulking portion applied on the inner peripheral edge of said boss.

3.   The scroll type fluid displacement apparatus of claim 1 wherein said moving prevent device comprises a flat annular plate attached on the axial end surface of said boss by bolts.

4.   The scroll type fluid displacement apparatus of claim 1 wherein said moving prevent device comprises a snap ring disposed within an inner surface of said boss.

- 10 -

5.    A scroll type fluid displacement apparatus comprising:

a housing having a front end plate;

a fixed scroll fixedly disposed relative to said housing and having a circular end plate from which a first wrap extends;

an orbiting scroll having a circular end plate from which a second wrap extends and an annular boss extending from said circular end plate the opposite side thereof said second wrap extends, said first and second wrap interfitting at an angular and radial offset to make a plurality of line contacts to define at least one pair of sealed off fluid pockets;

driving device operatively connected to said orbiting scroll and including a drive shaft and a drive pin eccentrically projecting from an inner end of said drive shaft and extended within said boss, and a bossing rotatably carried on said drive pin;

rotation preventing/thrust bearing device desposed between the inner end surface of said housing and said second end plate to maintain the angular orientation between said fixed and orbiting scroll bearing orbital motion of said orbiting scroll; and

a bearing closely fitted within said boss to located between said boss and bushing and prevented from axial movement by moving prevent device disposed on the axial end portion of said boss.

FIG.1

FIG.2

233

233a

232

23

231

FIG.3

233

36

33

35

36

232

231

23

FIG.4

0122066

233

232

231

33

37

23

233b

FIG.5

37

FIG.6

0122066

## European Patent Office

## EUROPEAN SEARCH REPORT

Application number

## DOCUMENTS CONSIDERED TO BE RELEVANT

EP 84301775.7

| Category | Citation of document with indication, where appropriate, of relevant passages | Relevant to claim | CLASSIFICATION OF THE APPLICATION (Int. Cl. ³) |
|---|---|---|---|
| X | EP - A2 - 0 069 531 (SANKYO ELECTRIC)<br>* Page 10, last paragraph; page 11; fig. 4 * | 1,2,5 | F 04 C 18/02 |
| A | * Page 12, last paragraph, fig. 4 * | 3 | |
| A | * Page 14, lines 23-25; fig. 9,10 * | 4 | |
| A | US - A - 3 994 633 (SHAFFER)<br>* Fig. 1 * | 1,5 | |
| A,D | US - A - 4 411 604 (SANDEN CORPORATION) | | |

TECHNICAL FIELDS
SEARCHED (Int. Cl. ³)

F 04 C   2/00
F 04 C  18/00
F 04 C  29/00
F 01 C   1/00

The present search report has been drawn up for all claims

| Place of search | Date of completion of the search | Examiner |
|---|---|---|
| VIENNA | 10-07-1984 | WITTMANN |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO Form 1503. 03.82